# FASCICULE DE BREVET EUROPEEN

(11) **EP 0 646 506 B1**
(45) Date de publication et mention de la délivrance du brevet: **25.11.1998**
(21) Numéro de dépôt: 94114576.5
(22) Date de dépôt: 16.09.1994
(51) Int. Cl.: B60R 25/10

(54) **Procédé de contrôle d'un organe antivol de véhicule avec système d'accès par commande à distance, et moyen antivol ainsi constitué**
Diebstahlschutzvorrichtung sowie Verfahren zu deren Steuerung für Kraftfahrzeuge mit fernsteuerbarer Verriegelung
Anti-theft control procedure and device therefor, for vehicles with remote control access systems

(30) Priorité: 30.09.1993 FR 9311671
(43) Date de publication de la demande: 05.04.1995
(73) Titulaire: VALEO SECURITE HABITACLE, 78290 Croissy-Sur-Seine (FR)
(72) Inventeur: Mingers, Thierry, D-85244 Rohrmoos (DE); Garcin, Philippe, F-58000 Nevers (FR)
(74) Mandataire: Gamonal, Didier

(56) Documents cités:
- WO-A-93/04899
- DE-A- 4 240 426
- GB-A- 2 261 992
- US-A- 4 719 460

## Description

Procédé de contrôle d'un moyen antivol de véhicule avec système d'accès par commande à distance, et organe antivol ainsi constitué.

La présente invention concerne un procédé de contrôle d'un moyen antivol de véhicule avec système d'accès par commande à distance. Elle concerne aussi un organe antivol ainsi constitué.

Dans l'état de la technique on a déjà proposé des dispositifs permettant de déverrouiller à distance et donc sans contact ni électrique ni mécanique les ouvrants d'un objet comme un véhicule. En particulier, par exemple dans le document US-A-4 719 460 on a développé des techniques d'accès sans clé (Keyless Entry System en anglais) qui permettent d'accéder à des ressources sans avoir à sortir une clé mécanique ou autrement d'autorisation de l'accès.

Un tel système est très attractif par le confort qu'il apporte à l'usager et par les possibilités de gestion des accès par des moyens informatiques qu'il permet.

Dans l'application au verrouillage et au déverrouillage d'ouvrants comme ceux d'un véhicule, ou d'un antivol de sécurité comme celui d'une colonne de direction, ou de l'arbre de sortie de la boite de vitesses d'un véhicule, on a dans cette optique proposé des systèmes mécaniques utilisant des organes moteur de type électrique. Quand le système de gestion des accès reconnaît le droit d'accès et une demande d'accès, un organe de commande produit un ordre d'actionnement qui excite l'organe moteur comme un électro-aimant ou un moteur électrique. L'antivol et/ou le verrou changent d'état en passant de l'état verrouillé à l'état déverrouillé.

Une séquence analogue inverse est produite pour la sortie ou l'activation de l'antivol.

Cependant, particulièrement dans l'application automobile, des situations dangereuses apparaissent à l'usage quand on utilise ce type de systèmes d'accès sans contact qui télécommande à la fois les ouvrants et l'antivol du véhicule. Par exemple, le dispositif d'identification ou télécommande peut être oublié par l'usager à l'intérieur du véhicule et de ce fait, l'activation de l'antivol et/ou du verrou des ouvrants n'est pas assuré.

Pour remédier à l'oubli de la télécommande, qui prend la forme d'une clé ou d'une carte, on a proposé de détecter l'oubli de la télécommande par diverses techniques. Le résultat positif de cette détection produit une alarme qui est présumée attirer l'attention de l'usager oublieux.

Mais ce type de dispositif complique notamment le système de contrôle d'accès et donc augmente son coût et réduit sa fiabilité et sa sécurité d'utilisation. De plus, il ne règle pas d'autres problèmes.

En particulier, certains systèmes produisent des actions intempestives comme des verrouillages, par exemple si la télécommande a été oubliée au-delà d'un certain délai. Dans ce cas, l'usager perd la possibilité de pénétrer dans son véhicule.

Dans d'autres situations conduisant aussi à des actions intempestives, l'usager peut perdre temporairement sa télécommande alors que le véhicule est ouvert et parfois, plus encore, quand il est en train de rouler. Il s'ensuit que le système de gestion des accès ne trouve plus la présence de la télécommande. Notamment quand la télécommande travaille en mode transpondeur, dans lequel un module de bord interroge périodiquement la présence de la télécommande, des actions intempestives, ou même dangereuses pour le véhicule, peuvent être commandées par le système d'accès.

Enfin, particulièrement dans le domaine automobile, tant les habitudes des usagers que les normes nationales ou internationales en matière d'assurances contre le vol, ou de sécurité en matière de véhicules, conduisent à une difficulté d'adaptation des systèmes d'accès dit sans clé, dans lesquels l'usager porteur d'une télécommande accède directement au véhicule dont la centrale de contrôle d'accès, dès qu'elle détecte la présence de l'usager autorisé, produit un déverrouillage des ouvrants et de l'antivol. De ce fait, les dispositifs actuellement proposés par les constructeurs ne permettent pas à la fois de respecter les usages acquis par l'habitude et les règlements de sécurité.

La présente invention permet notamment de résoudre les divers problèmes mentionnés plus haut.

En effet, la présente invention concerne un procédé de contrôle d'un moyen antivol de véhicule, ou d'un dispositif du même genre, avec système d'accès par commande à distance, le moyen d'antivol comportant un organe antivol et une centrale antivol , le moyen antivol comportant notamment un commutateur de commande de démarrage et d'alimentation électrique des accessoires du véhicule, caractérisé par le fait que, dans une phase de désactivation du moyen antivol, l'utilisateur :
- accède au véhicule avec une télécommande et ;
- manoeuvre un commutateur, ladite manoeuvre reproduisant les manipulations habituelles des clés mécaniques ; ensuite la centrale antivol ;
- détecte une position déterminée du commutateur pour produire une interrogation d'identification d'une demande de déverrouillage de l'organe antivol par échange de signaux avec le système d'accès par commande à distance ;
- produit en réponse un ordre d'activation des positions successives du commutateur et un ordre de déverrouillage de l'organe antivol puis, dans une phase d'activation du moyen antivol ; la centrale antivol ;
- détecte une manoeuvre d'activation du moyen antivol sur le commutateur, ladite manoeuvre reproduisant les manipulations habituelles des clés mécaniques ;
- détecte une manoeuvre d'activation du moyen antivol sur le commutateur, ladite manoeuvre reproduisant les manipulations habituelles des clés mécaniques ;
- active le moyen antivol en produisant un ordre de verrouillage de l'organe antivol ;
- désactive les positions successives du commutateur.

D'autres caractéristiques et avantages de la présente invention seront mieux compris à l'aide de la description et des dessins qui sont :
les figures 1 et 2 : deux organigrammes mettant en oeuvre le procédé de l'invention ;
   - la figure 3 : un schéma de principe d'un mode de réalisation de l'invention ;
   - la figure 4 : un schéma développé du mode de réalisation de la figure 3 ;
   - les figures 5 à 7 : des vues d'un mode de réalisation du commutateur dans la position arrêt ;
   - les figures 8 à 10 : des vues d'un mode de réalisation du commutateur dans la position déverrouillage ;
   - les figures 11 et 12 : des vues d'un mode de réalisation du commutateur dans la position marche ;
   - les figures 13 et 14 : des vues du moyen de verrouillage de la colonne de direction par un moteur électrique ;
   - la figure 15 : une vue du boîtier de raccordement électrique et mécanique de l'antivol selon l'invention ;
   - la figure 16 : une vue en éclaté de l'antivol de la figure 15.

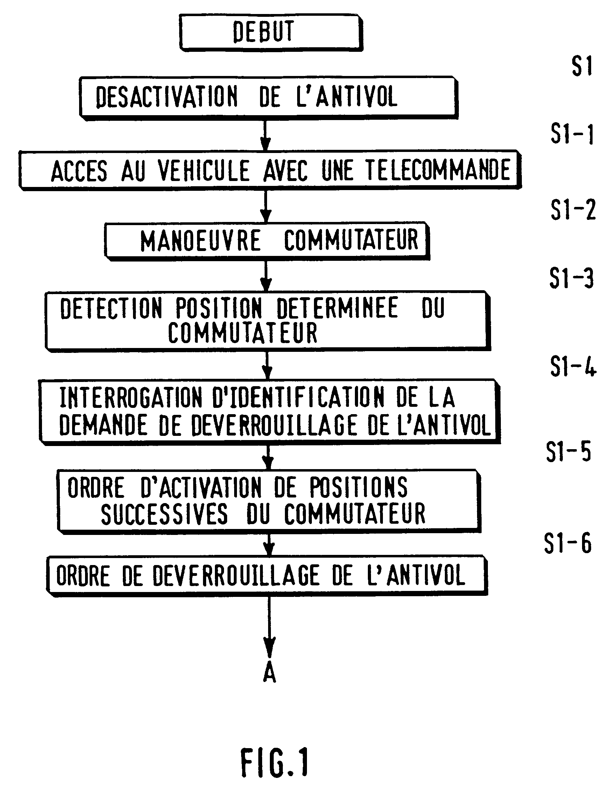

A la figure 1, l'organigramme représente la séquence des opérations effectuées quand l'utilisateur autorisé pénètre dans le véhicule, organe antivol verrouillé. La figure 1 décrit donc la phase S1 dite de désactivation du moyen antivol. Cette phase comporte principalement une étape S1-1 pendant laquelle l'utilisateur accède au véhicule à l'aide d'une télécommande. Cette télécommande libère les verrous qui protègent au moins un ouvrant du véhicule, ouvrant par l'ouverture duquel l'utilisateur accède au tableau de bord et à la colonne de direction. A la suite de cette opération le moyen antivol est cependant toujours verrouillé.

Le tableau de bord est équipé d'un commutateur de type sensiblement proche du commutateur de démarrage du véhicule bien connu. L'utilisateur manoeuvre alors une clé de contact ou un anneau d'allumage ("ignition ring" dans les pays anglo-saxons).

Par cette clé, ou par tout autre moyen convenable, l'utilisateur au cours d'une étape S1-2 manoeuvre le commutateur de démarrage.

Le moyen antivol de l'invention est connecté à une centrale d'antivol qui teste alors la position du commutateur lors d'une étape S1-3.

La centrale d'antivol comporte un circuit d'analyse capable de lire la position sur laquelle est placé le commutateur de démarrage. Le commutateur de démarrage est, au point de vue électrique, constitué par au moins un interrupteur à plusieurs contacts, un contact au moins étant associé à une position du commutateur de démarrage. Les contacts du commutateur de démarrage sont notamment reliés à des ports d'entrée d'une unité centrale constituée par un microcontrôleur comme un circuit INTEL 8051. Ce dernier contient un programme de lecture des ports d'entrée pour informer la centrale antivol de la position du commutateur de démarrage. A cette fin, le doigt mobile de chaque interrupteur du commutateur de démarrage est connecté à une tension électrique convenable comme celle établie à la borne positive de la batterie du véhicule.

Dans d'autres modes de réalisation, la tension disponible sur les contacts associés aux positions du commutateur de démarrage est transmise à l'unité centrale de la centrale antivol par l'intermédiaire d'un circuit d'interfaçage pour adapter le signal au port auquel il est relié.

Quand la centrale d'antivol détecte une position a du commutateur de démarrage, elle déclenche une séquence d'identification de la demande de déverrouillage du moyen antivol lors d'une étape S1-4.

Si l'utilisateur est reconnu, la centrale antivol produit un ordre d'activation admettant le décodage de positions suivantes du commutateur de démarrage sur des contacts électriques b, c, et d lors d'une étape S1-5.

La centrale antivol produit aussi successivement ou concurremment un ordre de déverrouillage de la colonne de direction si l'organe antivol travaille par verrou sur la colonne de direction, lors d'une étape S1-6.

En fonction de la nature de l'organe antivol, la centrale d'antivol peut émettre d'autres ordres de déverrouillage comme celui d'un calculateur d'injection, d'un circuit d'allumage, d'un commutateur de batterie, etc. ... .

Si l'utilisateur n'est pas reconnu, une étape non représentée à la figure 1 permet :
- ou bien de reprendre une procédure de désactivation du moyen antivol depuis le début, le nombre de reprises pouvant être limité (à trois par exemple) ;
- ou bien de bloquer la procédure de désactivation et éventuellement de produire une alarme ou une inscription en mémoire des circonstances du refus de désactivation, notamment si la reprise de la procédure de désactivation a été déjà effectuée un nombre prédéterminé de fois (3 dans un exemple préféré).

Cette étape S1-6 conclut la phase de déverrouillage ou de désactivation du moyen antivol, à la suite de laquelle le véhicule peut être mis en route.

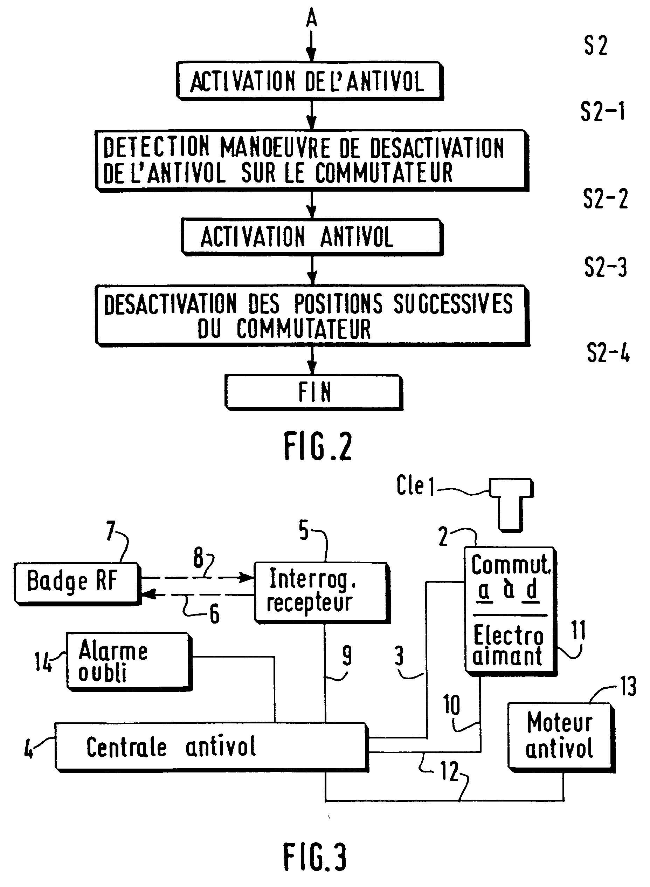

A la Figure 2, on a représentée une phase S2 dite d'activation ou de verrouillage de la colonne, qui par inversion des étapes précédentes, permet de revenir à un état d'antivol actif.

Lors de l'étape S2-1, la centrale d'antivol détecte une manoeuvre du commutateur qui consiste à faire revenir ce dernier vers une position acceptant le retrait de la clé ou fausse clé.

Lors de l'étape S2-2, la centrale d'antivol active le moyen d'antivol. Puis, on désactive les positions successives a à d du commutateur. On termine ainsi le processus d'activation du moyen antivol.

A la figure 3, on a représenté un schéma de principe d'un mode de réalisation de l'invention.

A la figure 3, le moyen d'antivol de l'invention comporte une clé ou fausse clé 1, représentée en forme de T, et qui est destinée à venir s'introduire dans le canon ou faux canon d'un commutateur 2. Le commutateur 2 est connecté par une entrée de la centrale antivol 4 par l'intermédiaire d'une liaison 3. Par une autre entrée, la centrale antivol 4 échange des signaux avec une station d'interrogation et de réception 5 qui échange 6,8 des signaux avec un badge 7 d'accès sans clé au véhicule. En fonction des échanges qui seront décrits plus loin, la centrale antivol produit sur une liaison 10 un ordre d'activation d'un électro-aimant 11, qui a pour fonction de permettre l'activation ou la désactivation de l'antivol.

D'autre part, par une liaison 12, la centrale d'antivol 4 produit un ordre de fonctionnement d'un organe antivol motorisé 13 comportant un moteur pour un antivol de colonne de direction ou d'un autre organe de sécurité du véhicule.

D'autre part, si l'utilisateur du véhicule oublie le badge radiofréquence à l'intérieur du véhicule ou s'il omet de manoeuvrer la clé 1 pour entrer dans la séquence d'activation S2 du moyen antivol alors qu'il laisse son badge 7 dans le véhicule, la centrale antivol 4 produit l'activation d'un moyen d'alarme d'oubli 14.

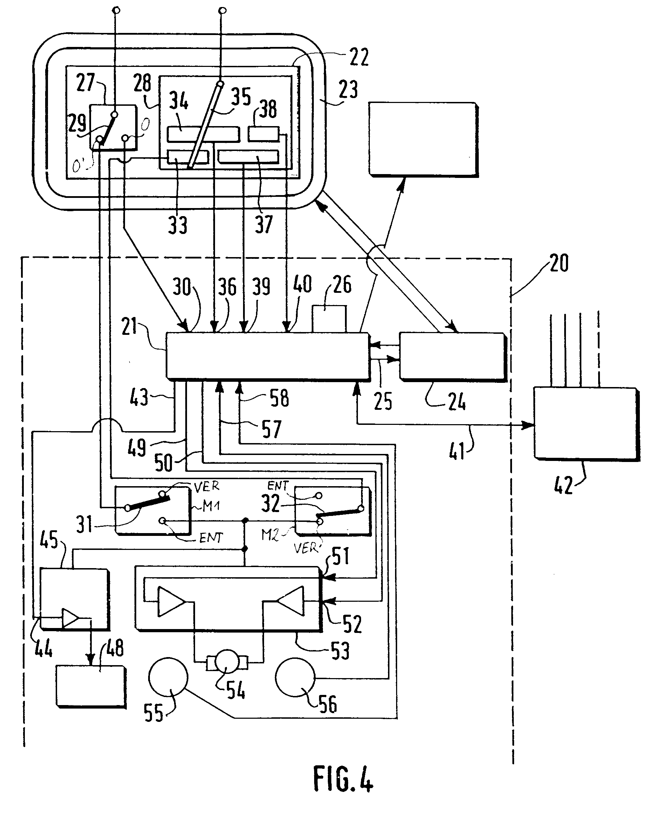

A la figure 4, on a représenté un schéma développé du schéma de principe de la figure 3. La clé autorisée est ici réalisée sous la forme d'un badge.

Le moyen d'antivol 20 comporte une centrale antivol avec notamment une unité centrale 21 qui est connectée de manière électrique au commutateur 22. D'autre part, le commutateur 22 est, dans un mode de réalisation, entouré par un moyen 23 de lecture écriture sans contact du badge, comme une antenne, par exemple le badge fonctionnant dans un mode en faible puissance rayonnée de façon à limiter les risques d'écoute pirate.

L'antenne est connectée à une unité de lecture écriture 24 qui est elle-même connectée par une liaison bi-directionnelle 25 à l'unite centrale 21. Le contenu en données de l'unité centrale est, dans un mode de réalisation, sauvegardé par des accumulateurs d'électricité 26 qui permettent son fonctionnement même quand la batterie du véhicule est déconnectée.

Le commutateur 22 comporte principalement un premier interrupteur à deux positions 27 qui est manoeuvré par l'introduction ou le retrait de la clé ou fausse clé (non représentée à la figure 4), et un second interrupteur 28 à plusieurs positions qui reproduisent les positions d'alimentation successives des divers accessoires du véhicule et qui sont bien connus de l'homme de métier.

Dans un mode de réalisation, le badge est installé dans la tête de la clé. Celle-ci présente une tige ou lame qui peut ou non présenter des indentations ou d'autres moyens, mécaniques ou non, pour servir à un verrou. Celui-ci présente un canon ou fente à travers laquelle est introduite la clé ou fausse clé. L'insertion ou l'extraction de la clé dans la fente est détectée par le premier interrupteur 27 dont un doigt mobile 29 est manoeuvré par la clé ou fausse clé.

Dans un autre mode de réalisation, la clé et le badge sont deux éléments distincts. Le badge reste par exemple porté par le conducteur, dans sa poche ou sur la montre de poignet, ou tout autre. La clé peut être mobile et être insérée et extraite de la fente du commutateur de démarrage ou peut être quasi fixe et être seulement mobile entre deux positions extrêmes dans la fente. Le doigt mobile 29 du premier interrupteur 27 est relié en permanence à la borne +BATT de la batterie du véhicule et l'autre extrémité est ou bien connectée dans la position O' quand la clé ou fausse clé n'est pas engagée ou bien connectée dans la position O quand la clé ou fausse clé est engagée.

Le contact O est connecté à un port d'entrée 30 de l'unité centrale 21 qui reçoit ainsi l'information que la fausse clé a été présentée dans le commutateur 22.

Le contact O' est connecté au doigt mobile 31 d'un interrupteur M1 qui est manoeuvré par l'organe antivol lui-même. En effet, dans l'état verrouillé de l'organe antivol, l'interrupteur M1 est placé sur un contact VER qui n'est pas connecté électriquement, tandis que dans l'état déverrouillé de l'antivol, l'interrupteur M1 est basculé sur un contact ENT qui est connecté sur les bornes d'alimentation en tension positive de circuit d'alimentation 45 et 53 qui seront décrits plus loin.

Le contact ENT de l'interrupteur M1 est connecté à un contact VER d'un second interrupteur M2 dont le doigt mobile 32 est sur le contact VER quand l'organe antivol est dans l'état verrouillé et sur un contact ENT quand il est dans l'état déverrouillé et qui est connecté en permanence à une zone 33 conductrice du second interrupteur 28 du commutateur 22.

Le second interrupteur 28 du commutateur 22 comporte un doigt mobile 35 qui est manoeuvré par la rotation de la fausse clé quand celle-ci tourne de manière classique dans le canon ou fente du commutateur 22.

Pour admettre le mouvement de rotation, la clé ou fausse clé doit être insérée dans la fente précitée du commutateur de démarrage. Dans un mode de réalisation, la fente est constituée dans un organe lui-même susceptible de tourner autour d'un axe, notamment d'un axe parallèle à la direction d'insertion ou d'extraction de la clé. Le doigt mobile 35 du second interrupteur 28 est asservi au mouvement de rotation précité. Le doigt mobile 35 du second interrupteur 28 est, dans la première position, connecté sur la plage conductrice 33 et sur une plage conductrice 34. La plage conductrice 34 est connectée à un port d'entrée 36 de l'unité centrale 21.

Le second interrupteur 28 du commutateur 22 comporte ensuite des plages conductrices 37 et 38 et éventuellement à d'autres plages conductrices supplémentaires et qui sont connectées à des ports d'entrée respectivement 39 et 40 de l'unité centrale 21. L'unité centrale 21 peut être connecté par un bus 41 à un ordinateur central 42 de gestion de l'alimentation électrique du véhicule et qui exploite l'information de position des premier et second interrupteurs 27 et 28 du commutateur 22 ainsi que des capteurs de position M1, M2, H1 et H2.

L'unité centrale 21 et l'ordinateur central 42 échangent leurs informations selon un protocole prédéterminé sur le bus 41 qui est bi-directionnel.

L'unité centrale 21 comporte un port de sortie 43 qui est connecté à l'entrée d'activation 44 d'un circuit d'alimentation 45 de l'électro-aimant 48 qui permet d'activer l'organe antivol de l'invention. Le circuit d'alimentation 45 est constitué par un amplificateur de puissance qui est alimenté à la borne +BATT de la batterie du véhicule par l'intermédiaire du premier interrupteur M1 quand celui-ci est sur son contact ENT, connecté au +BATT quand l'organe antivol est dans l'état déverrouillé sans panne.

L'unité centrale 21 comporte aussi deux ports de sortie 49 et 50, le premier activé à l'état haut quand l'organe antivol est dans l'état verrouillé, le second 50 étant activé à l'état haut quand l'organe antivol est dans l'état déverrouillé.

Les ports 49 et 50 sont respectivement connectés à des entrées 51 et 52 d'un circuit d'alimentation 53 bidirectionnel en courant d'alimentation d'un moteur 54 qui mobilise le pêne mobile de l'organe d'antivol motorisé (non représenté). Le pêne mobile entraîne un élément magnétique (non représenté) qui, dans la position verrouillée, est disposé à proximité d'un premier capteur 55 à effet Hall quand l'organe antivol est dans l'état verrouillé et à proximité d'un second capteur 56 à effet Hall quand l'organe antivol est dans l'état déverrouillé. Les signaux issus des capteurs 55 et 56 sont transmis à des ports d'entrée respectivement 57 et 58 de l'unité centrale 21 pour informer l'unité centrale de l'état verrouillé ou déverrouillé du pêne pivotant de l'organe antivol de colonne de direction.

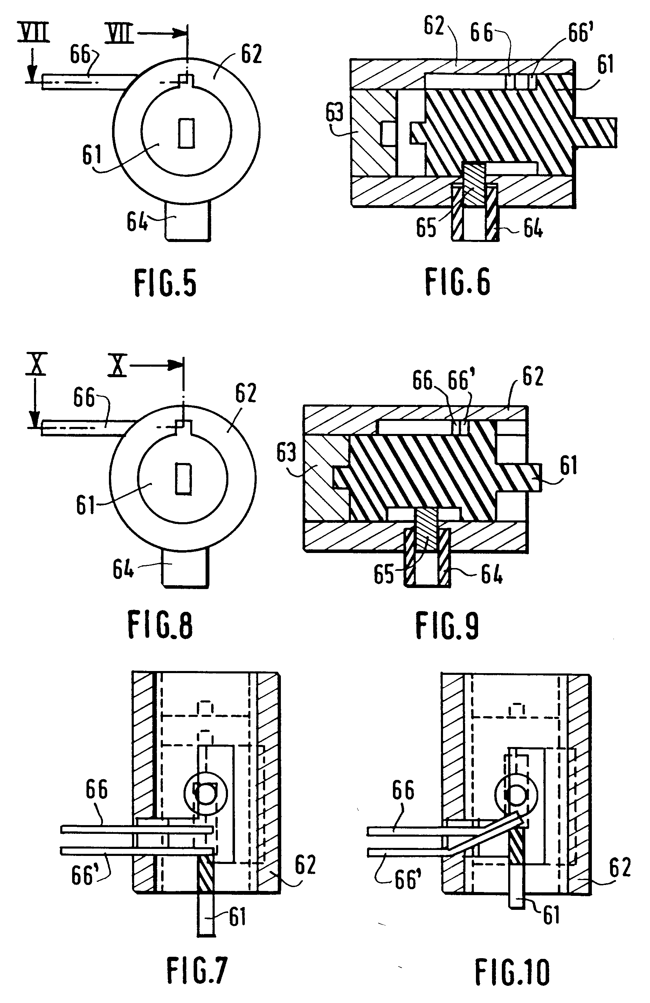

Aux figures 5 à 7, on a représenté une vue de face, une vue de côté en coupe et une vue de dessus d'un commutateur selon l'invention.

Le commutateur de l'invention comporte un rotor 61, un stator 62, un interrupteur 63 permettant la distribution électrique au véhicule, un électro-aimant comprenant une bobine 64 et un plongeur 65, un interrupteur constitué par deux lames souples 66 et 66' pouvant faire contact.

Véhicule au repos, le commutateur est dans la position arrêt représentée aux figures 5 à 7. Pour accéder à la conduite, l'utilisateur doit pousser le rotor du commutateur grâce à une forme préhensible qui est visible aux figures 6 et 9 sur le rotor 61 sous la forme d'une avancée qui fait saillie vers l'extérieur du commutateur. Cette forme en saillie constitue une fausse clé qui reste à demeure sur le commutateur de démarrage et permet un mouvement d'insertion puis de retrait et un mouvement de rotation après l'insertion, de façon à simuler l'action d'une clé mécanique et afin de produire une action positive qui confirme l'intention du conducteur de verrouiller ou de déverrouiller l'organe antivol, ainsi éventuellement que celle de quitter le véhicule après désactivation de l'antivol. Ce mode de réalisation a déjà été décrit plus haut partiellement pour la partie de structure électrique et va être détaillé pour la partie de structure mécanique.

Dans un autre mode de réalisation, la clé est amovible et suit le conducteur. Elle peut porter, notamment dans sa tête, le badge émetteur du système d'entrée sans clé. Cet autre mode de réalisation ne sera pas plus décrit.

On constate ici que l'antivol de l'invention coopère avec le système d'accès sans clé par le moyen de l'antenne intégrée au commutateur de démarrage notamment.

On va maintenant décrire le mode de réalisation mécanique dans lequel une forme fait saillie pour permettre sa préhension par l'usager sur le commutateur de démarrage.

Quand le rotor 61 est enfoncé à fond, il est en position de déverrouillage, ce qui produit la mise en contact entre les lames 66 et 66' d'une part et le rotor 61 vient sur l'interrupteur 63 d'autre part. On remarque que l'interrupteur 63 et les lames 66 et 66' correspondent respectivement au second interrupteur 28 et au premier interrupteur 27 du commutateur 22 du mode de réalisation de la figure 4.

Les figures 8 à 10 représentent donc le commutateur dans la position de déverrouillage.

Si l'utilisateur, porteur d'un badge autorisé, est reconnu par l'unité centrale 21, ce dernier produit la séquence de désactivation de l'organe antivol. Lors du démarrage du véhicule, l'utilisateur enfonce la fausse clé ou rotor 61, les moyens de détection 55 et 56 (figure 4) envoient un signal à l'unité centrale 21 qui libère le plongeur 65 de l'électro-aimant 64,65 du commutateur des figures 6,9 et 12. L'utilisateur peut alors faire tourner la fausse clé 1 (ou rotor) pour accéder aux fonctions de démarrage du véhicule.

A l'inverse, pour quitter le véhicule, l'utilisateur tourne la fausse clé ou rotor 61 en sens inverse, puis tire le rotor 61. Les lames 66 et 66' se décollent, interrompant le courant électrique qui les traversent, situation qui est reconnue par l'unité central 21 qui produit alors la séquence de verrouillage de colonne.

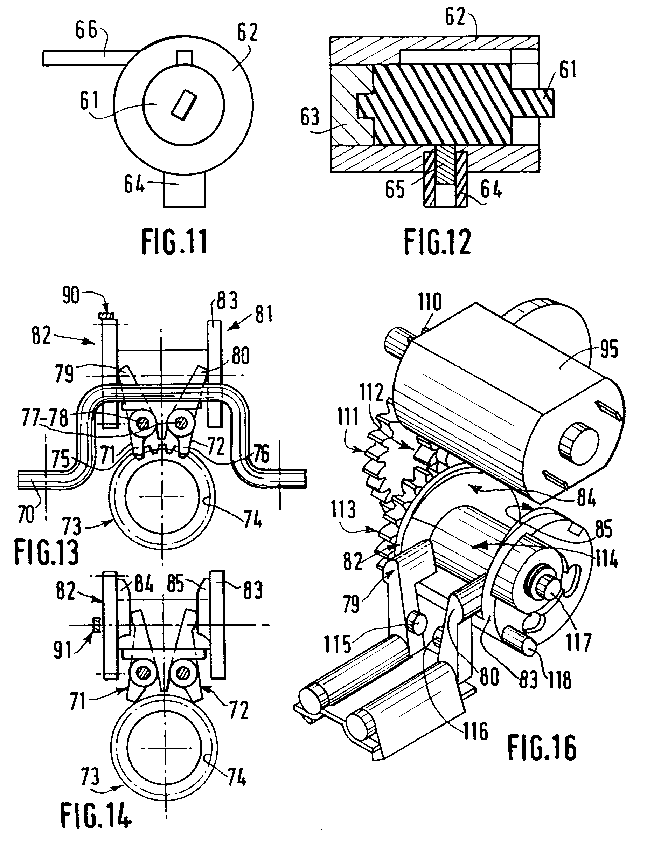

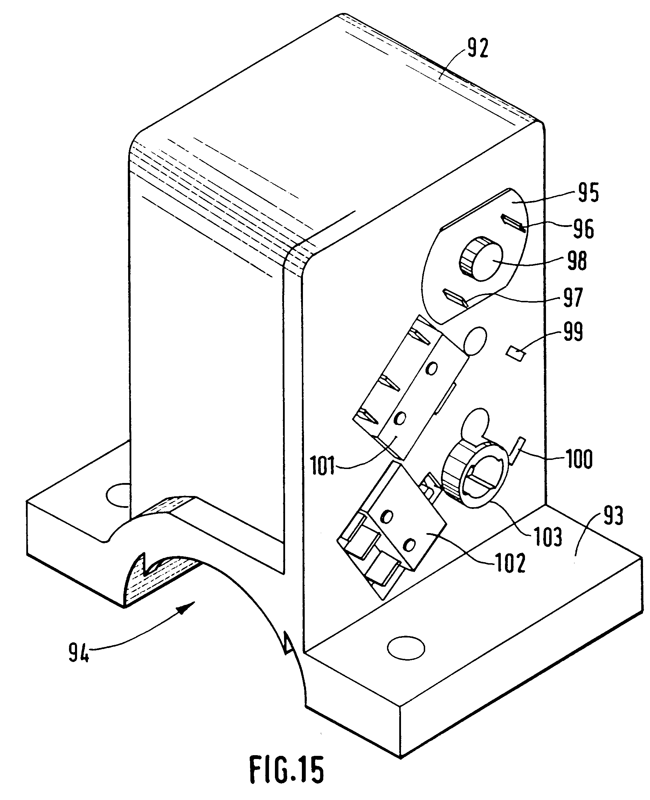

Aux figures 13 et 14, on a représenté un mode de réalisation de l'organe de verrouillage de la colonne de direction équipé de pênes pivotants.

L'organe de verrouillage à la figure 13 comporte une bride de fixation 70 sur laquelle sont montés des pênes pivotants 71 et 72. La colonne de direction 73 est munie d'une partie dentée 74, l'espace entre deux dents successives étant destiné à recevoir l'extrémité 75 du pêne 71 et 76 du pêne 72. Les pênes pivotants sont montés sur des articulations 77 et 78 et comportent des leviers 79 et 80 qui sont mobilisés par un organe moteur 81. L'organe moteur comporte un moteur électrique commandé par le microcontrôleur 21 de la figure 3, dont l'arbre de rotation entraîne des cames 82 et 83 en rotation. Les cames 82 et 83 sont en contact avec l'extrémité libre des leviers 79 et 80 de façon à :
- dans l'état verrouillé de l'organe de verrouillage (figure 13) bloquer les pênes pivotants en engagement sur le secteur denté 74 de la colonne 73 ;
- dans l'état déverrouillé de l'organe de verrouillage (figure 14) à repousser les pênes pivotants 71 et 72 hors de la zone dentée 74 de façon à libérer la colonne de direction.

A la figure 14, les profils sont visibles sous la référence 84 pour la came 82 et 85 pour la came 83.

D'autre part l'organe de verrouillage comporte deux capteurs de position respectivement 90 à la figure 13 et 91 à la figure 14, qui sont à l'état actif respectivement quand l'organe de verrouillage est dans l'état déverrouillé et quand l'organe de verrouillage est dans l'état verrouillé.

A la figure 15, on a représenté le boîtier contenant l'organe de verrouillage selon l'invention. Le boitier 92 de l'organe de verrouillage comporte des brides de fixation 93 sur une partie fixe du véhicule et un alésage 94 à travers lequel passe la colonne de direction (non représentée). Le boîtier 92 porte le moteur électrique 95 avec ses bornes électriques 96 et 97 ainsi que le bout d'arbre de rotation 98. Le boîtier 92 porte aussi des boîtiers 99 et 100 constituant les capteurs à effet Hall décrits précédemment aux figures 4 (H1 et H2) et 13 et 14 (90,91).

Le boîtier 92 porte ensuite les boîtiers 101 et 102 des interrupteurs M1 et M2 de la figure 4 qui permettent de confirmer l'état de l'organe de verrouillage pour le microcontrôleur 21.

Enfin le boîtier 92 comporte un logement 103 à l'intérieur duquel est disposé un électro-aimant de blocage en rotation des cames. L'effet de cet électro-aimant est de bloquer ou non la rotation de la colonne de direction qui est disposée entre les cames de blocage 82, 83.

A la figure 16 on a représenté un plan en éclaté du contenu du boîtier 92 de la figure 15. Le moteur électrique 95 entraîne par l'intermédiaire d'un pignon 110 un réducteur constitué de pignons 111,112 et 113. Le pignon 113 est monté sur un arbre de rotation 114 sur lequel sont montées de part et d'autre les cames 82 et 83.

On a représenté aussi les leviers 79 et 80 des pênes pivotants ainsi que des tétons 115 et 116 qui emprisonnent un ressort spiral (non représenté) qui permet de repousser en permanence les leviers 79 et 80 sur le profil 84 ou 85 des cames 82 et 83.

On a aussi représenté le noyau plongeur 117 de l'électro-aimant, qui, quand sa bobine (non représentée) est parcourue par un courant relâche un blocage de l'arbre de rotation creux 114.

On a aussi représenté un doigt 118 destiné à venir manoeuvrer l'armature mobile des interrupteurs 101 et 102 qui réalisent les interrupteurs M1 et M2 de la figure 4.

## Revendications

1. Procédé de contrôle d'un moyen antivol de véhicule, ou d'un dispositif du même genre, avec système d'accès (5, 7) par commande à distance, le moyen d'antivol comportant un organe antivol (13) et une centrale antivol (4), le moyen antivol comportant notamment un commutateur (2, 22) de commande de démarrage et d'alimentation électrique des accessoires du véhicule, caractérisé par le fait que,
dans une phase (S1) de désactivation du moyen antivol, l'utilisateur :
- accède (S1-1) au véhicule avec une télécommande et ;
- manoeuvre (S1-2) le commutateur (2, 22), ladite manoeuvre reproduisant les manipulations habituelles des clés mécaniques ; ensuite la centrale antivol (4) ;
- détecte (S1-3) une position déterminée du commutateur (2, 22) pour produire (S1-4) une interrogation d'identification d'une demande de déverrouillage de l'organe antivol (13) par échange de signaux avec le système d'accès (5, 7) par commande à distance ;
- produit (S1-5) en réponse un ordre d'activation des positions successives du commutateur (2, 22) et un ordre de déverrouillage de l'organe antivol (13),
puis, dans une phase (S2) d'activation du moyen antivol, la centrale antivol (4):
- détecte (S2-1) une manoeuvre d'activation du moyen antivol sur le commutateur (2, 22), ladite manoeuvre reproduisant les manipulations habituelles des clés mécaniques ;
- active (S2-1) le moyen antivol en produisant un ordre de verrouillage de l'organe antivol (13) ;
- désactive (S2-3) les positions successives du commutateur (2, 22).

2. Procédé selon la revendication 1, caractérisé en ce que la manoeuvre (S1-2) du commutateur (2, 22) comporte une phase au cours de laquelle on simule l'introduction d'une clé (1) dans le commutateur (2, 22), ladite phase étant matérialisée par un mouvement de translation, et une phase au cours de laquelle on exécute le démarrage et l'alimentation successifs des accessoires du véhicule.

3. Procédé selon la revendication 1 ou 2, caractérisé en ce que, après manoeuvre du commutateur (2, 22), il consiste à émettre une séquence d'interrogation par ondes pour détecter la présence d'une clé (1) ou badge (7) sans contact puis, en cas de détection positive, à émettre un ordre de déverrouillage de l'organe antivol (13).

4. Procédé selon la revendication 3, caractérisé en ce qu'il consiste en cas de non reconnaissance de l'utilisateur par la séquence d'interrogation, à bloquer la procédure de désactivation après au moins une tentative de désactivation, à émettre une alarme et/ ou à enregistrer en mémoire les circonstances du refus de désactivation.

5. Moyen antivol d'un objet comme un véhicule, selon la revendication 1 comportant :
- un module interrogateur-récepteur (5) d'un badge comme un badge (7) d'un système d'accès sans clé au véhicule, notamment de type radiofréquence RF,
- un commutateur (2, 22) de démarrage et d'alimentation des accessoires du véhicule,
- un organe antivol motorisé (13),
- une centrale d'antivol (4) comportant notamment une unité centrale (21) connectée aux précédents éléments de façon à mettre en oeuvre le procédé de l'invention selon aux moins une des revendications précédentes,
caractérisé en ce qu'il comporte une clé (1) destinée à manoeuvrer le commutateur (2, 22) et qui coopère avec le badge de système d'accès sans clé au véhicule.

6. Moyen selon la revendication 5, caractérisé en ce que la clé (1) est constituée par un rotor (61) doté d'une partie préhensile sous la forme d'une avancée qui fait saillie à l'extérieur du commutateur.

7. Moyen selon l'une des revendications 5 ou 6, caractérisé en ce qu'il comporte un premier interrupteur (27 ; 66, 66') de détection de l'enfoncement de la clé (1), et un second interrupteur (28 ; 63) de détection de la rotation de la clé dans le commutateur pour l'alimentation séquentielle des accessoires du véhicule.

8. Moyen selon la revendication 7, caractérisé en ce que le premier interrupteur (27) est constitué par deux lames conductrices (66, 66') rapprochées en contact l'une de l'autre lors de l'introduction de la clé (1).

9. Moyen selon la revendication 5, caractérisé en ce qu'il comporte des moyens de détection de l'état verrouillé/ déverrouillé de l'organe antivol (13), qui comportent des premier (M1) et second (M2) interrupteurs manoeuvrés par l'antivol motorisé (13) et qui sont connectés d'une part à la centrale antivol (4, 21) et d'autre part à des circuits d'alimentation (45, 53) d'un moyen de blocage de l'antivol (48) et d'un moteur (54) qui mobilise un pêne (71, 72) de l'antivol (13).

10. Moyen selon la revendication 9, caractérisé en ce que les moyens de détection de l'état verrouillé/déverrouillé de l'organe d'antivol (13) comportent aussi deux capteurs à effet Hall (H1, H2) qui sont connectés à l'unité centrale (21) pour l'informer de l'état de l'antivol motorisé (13).

11. Moyen selon l'une des revendications 5 à 10, caractérisé en ce que le module antivol comporte une unité centrale (21) dont les ports d'entrée sont connectés (30) à un contact (O) du premier interrupteur (27) du commutateur (22), (36, 39, 40) aux contacts successifs (34 - 37) du second interrupteur (28) du commutateur (22), (57, 58) aux capteurs à effet HALL (H1, H2) de détection de l'état verrouillé / déverrouillé de l'antivol, dont les sorties (49, 50) sont connectées aux entrées d'un circuit d'alimentation (53) bidirectionnel en courant connecté aux bornes du moteur (54) de l'antivol (13), qui est connecté par un bus bidirectionnel (41) à une unité centrale (42) servant d'ordinateur de bord pour échanger des informations sur leurs états réciproques, et une ligne bidirectionnelle (25) au module (24) de lecture écriture du badge RF.

## Claims

1. A method of controlling a vehicle anti-theft means, or a device of the same kind, with a remote control access system (5, 7), the anti-theft means including an anti-theft component (13) and a central anti-theft control unit (4), the anti-theft means including in particular a switch (2, 22) for the control of starting and of the supply of electrical power to the accessories of the vehicle, characterised by the fact that,
in a de-activated phase (S1) of the anti-theft means, the user:
- accesses (S1-1) the vehicle with a remote control unit; and
- manoeuvres (S1-2) the switch (2, 22), the said manoeuvre reproducing the usual manipulations of mechanical keys; and then the central anti-theft control unit (4);
- detects (S1-3) a predetermined position of the switch (2, 22) so as to produce (S1-4) an interrogation for identifying a demand to unlock the anti-theft component (13), by exchanging signals with the access system (5, 7) by remote control;
- produces (S1-5), in response, an order to activate successive positions of the switch (2, 22) and an order to unlock the anti-theft component (13);
then, in an active phase (S2) of the anti-theft means, the central anti-theft control unit (4) :
- detects (S2-1) a manoeuvre for activation of the anti-theft means on the switch (2, 22), the said manoeuvre reproducing the usual manipulations of mechanical keys;
- activates (S2-1) the anti-theft means by producing an order for locking of the anti-theft component (13);
- de-activates (S2-3) the successive positions of the switch (2, 22).

2. A method according to Claim 1, characterised in that the manoeuvre (S1-2) of the switch (2, 22) includes a phase in the course of which introduction of a key (1) into the switch (2, 22) is simulated, the said phase being realised by a movement in translation, and a phase in the course of which starting of the vehicle and the supply of power to its accessories are executed in succession.

3. A method according to Claim 1 or Claim 2, characterised in that, after the switch (2, 22) has been manoeuvred, it consists in emitting a sequence of interrogation by waves, so as to detect the presence of a key (1) or contactless badge (7), and then, where detection is positive, in emitting an order for unlocking the anti-theft component (13).

4. A method according to Claim 3, characterised in that it consists, in the event of failure of the user to be recognised by the interrogation sequence, in blocking the de-activating procedure after at least one attempt at de-activation, in emitting an alarm, and/or in recording in a memory the circumstances of the refusal to de-activate.

5. An anti-theft means for an object such as a vehicle, according to Claim 1, comprising:
- an interrogating-receiving module (5) for a badge such as a badge (7) of a keyless system for accessing the vehicle, especially of the radio frequency (RF) type,
- a switch (2, 22) for starting the vehicle and for supplying power to its accessories,
- a motorised anti-theft component (13),
- a central anti-theft control unit (4) comprising, in particular, a central unit (21) connected to the foregoing elements in such a way as to perform the method of the invention according to at least one of the preceding Claims;
characterised in that it includes a key (1) for manoeuvring the switch (2, 22) and cooperating with the badge of the keyless system for accessing the vehicle.

6. A means according to Claim 5, characterised in that the key (1) consists of a rotor (61) having a prehensile part in the form of a leading element which projects outside the switch.

7. A means according to Claim 5 or Claim 6, characterised in that it includes a first interruptor (27; 66, 66') for detecting insertion of the key (1), and a second interruptor (28; 63) for detecting rotation of the key in the switch, whereby to supply power sequentially to the accessories of the vehicle.

8. A means according to Claim 7, characterised in that the first interruptor (27) consists of two conductive leaves (66, 66') which are brought together into mutual contact during introduction of the key (1).

9. A means according to Claim 5, characterised in that it includes means for detection of the locked or unlocked state of the anti-theft component (13), including a first interruptor (M1) and a second interruptor (M2) which are manoeuvred by the motorised anti-theft component (13) and which are connected, firstly to the central anti-theft control unit (4, 21), and secondly to power supply circuits (45, 53) for a means for blocking the anti-theft means (48) and for a motor (54) which mobilises a latch (71, 72) of the anti-theft component (13).

10. A means according to Claim 9, characterised in that the means for detecting the locked or unlocked state of the anti-theft component (13) further include two Hall effect sensors (H1, H2) which are connected to the central control unit (21) for informing it of the state of the motorised anti-theft component (13).

11. A means according to one of Claims 5 to 10, characterised in that the anti-theft module comprises a central unit (21) the input ports of which are connected (30) to a contact (O) of the first interruptor (27) of the switch (22), (36, 39, 40) to the successive contacts (34 - 37) of the second interruptor (28) of the switch (22), (57, 58) to the Hall effect sensors (H1, H2) for detecting the locked or unlocked state of the anti-theft component, the outputs (49, 50) of the central unit being connected to the inputs of a two-way current supply circuit (53) connected to the terminals of the motor (54) of the anti-theft component (13), the central unit being connected through a two-way bus (41) to a central unit (42) serving as an on-board computer for exchanging information as to their reciprocal states, and through a two-way line (25) to the read-write module (24) of the RF badge.

## Patentansprüche

1. Verfahren zur Steuerung einer Diebstahlschutzvorrichtung eines Fahrzeugs oder einer Einrichtung derselben Art mit einem fernsteuerbaren Zugangssystem (5, 7), wobei die Diebstahlschutzvorrichtung ein Diebstahlschutzorgan (13) und eine Diebstahlschutzzentrale (4) umfaßt, wobei die Diebstahlschutzvorrichtung insbesondere einen Schalter (2, 22) zur Betätigung des Anlassers und der Stromversorgung der Zubehörteile des Fahrzeugs umfaßt,
**dadurch gekennzeichnet**, daß der Benutzer in einer Desaktivierungsphase (S1) der Diebstahlschutzvorrichtung:
- mit einer Fernsteuerung Zugang zum Fahrzeug hat (S1-1);
- den Anlaßschalter (2, 22) betätigt (S1-2), wobei die besagte Betätigung die üblichen Handhabungen der mechanischen Schlüssel reproduziert, woraufhin die Diebstahlschutzzentrale (4)
- eine bestimmte Position des Anlaßschalters (2, 22) erfaßt (S2-3), um eine Abfrage zur Identifizierung einer Anforderung zur Entriegelung des Diebstahlschutzorgans (13) durch einen Signalaustausch mit dem fernsteuerbaren Zugangssystem (5, 7) zu erzeugen;
- als Antwort einen Befehl zur Aktivierung der nachfolgenden Positionen des Anlaßschalters (2, 22) und einen Befehl zur Entriegelung des Diebstahlschutzorgans (13) erzeugt (S1-5), woraufhin die Diebstahlschutzzentrale (4) in einer Aktivierungsphase (S2) der Diebstahlschutzvorrichtung (4)
- eine Betätigung zur Aktivierung der Diebstahlschutzvorrichtung am Anlaßschalter (2, 22) erfaßt (S2-1), wobei die besagte Betätigung die üblichen Handhabungen der mechanischen Schlüssel reproduziert;
- die Diebstahlschutzvorrichtung aktiviert (S2-1), indem sie einen Befehl zur Verriegelung des Diebstahlschutzorgans (13) erzeugt;
- die nachfolgenden Positionen des Anlaßschalters (2, 22) desaktiviert (S2-3).

2. Verfahren nach Anspruch 1 , **dadurch gekennzeichnet,** daß die Betätigung (S1-2) des Anlaßschalters (2, 22) eine Phase umfaßt, in deren Verlauf das Einstecken eines Schlüssels (1) in den Anlaßschalter (2, 22) simuliert wird, wobei die besagte Phase konkret durch eine geradlinige Bewegung erfolgt, und eine Phase, in deren Verlauf nacheinander das Anlassen und die Stromversorgung der Zubehörteile des Fahrzeugs ausgeführt werden.

3. Verfahren nach Anspruch 1 oder 2 , **dadurch gekennzeichnet,** daß es nach der Betätigung des Anlaßschalters (2, 22) darin besteht, eine Abfragesequenz durch Wellen zu senden, um das Vorhandensein eines Schlüssels (1) oder einer Badge (7) ohne Kontakt zu erfassen und anschließend, im Falle einer positiven Erfassung, einen Befehl zur Entriegelung des Diebstahlschutzorgans (13) zu senden.

4. Verfahren nach Anspruch 3 , **dadurch gekennzeichnet,** daß es darin besteht, bei Nichterkennung des Benutzers durch die Abfragesequenz, das Desaktivierungsverfahren nach mindestens einem Desaktivierungsversuch zu sperren, einen Alarm auszugeben und/oder die Umstände der Desaktivierungsablehnung abzuspeichern.

5. Diebstahlschutzvorrichtung eines Gegenstands wie eines Fahrzeugs nach Anspruch 1, umfassend:
- ein Abfrage-Empfangsmodul (5) für eine Badge wie eine Badge (7) eines schlüssellosen Zugangssystems für das Fahrzeug, insbesondere in Hochfrequenz-Ausführung RF,
- einen Schalter (2, 22) für das Anlassen und die Stromversorgung der Zubehörteile des Fahrzeugs,
- ein motorbetriebenes Diebstahlschutzorgan (13),
- eine Diebstahlschutzzentrale (4), die insbesondere eine Zentraleinheit (21) umfaßt, die an die vorangehenden Elemente angeschlossen ist, um das erfindungsgemäße Verfahren nach mindestens einem der vorangehenden Ansprüche anzuwenden,
**dadurch gekennzeichnet,** daß sie einen Schlüssel (1) umfaßt, der zur Betätigung des Anlaßschalters (2, 22) bestimmt ist und der mit der Badge des schlüssellosen Zugangssystems für das Fahrzeug zusammenwirkt.

6. Vorrichtung nach Anspruch 5 , **dadurch gekennzeichnet,** daß der Schlüssel (1) aus einem Rotor (61) besteht, der mit einem Griffteil in Form eines Vorsprungs versehen ist, der außen am Anlaßschalter vorsteht.

7. Vorrichtung nach einem der Ansprüche 5 oder 6, **dadurch gekennzeichnet,** daß sie einen ersten Schalter (27; 66, 66') zur Erfassung des Einsteckens des Schlüssels (1) und einen zweiten Schalter (28; 63) zur Erfassung der Drehung des Schlüssels im Anlaßschalter für die sequentielle Stromversorgung der Zubehörteile des Fahrzeugs umfaßt.

8. Vorrichtung nach Anspruch 7 **, dadurch gekennzeichnet,** daß der erste Schalter (27) aus zwei leitenden Zungen (66, 66') besteht, die beim Einstecken des Schlüssels (1) miteinander in Kontakt gebracht werden.

9. Vorrichtung nach Anspruch 5 , **dadurch gekennzeichnet,** daß sie Mittel zur Erfassung des verriegelten/entriegelten Zustands des Diebstahlschutzorgans (13) umfaßt, die erste (M1) und zweite (M2) Schalter umfassen, die durch das motorbetriebene Diebstahlschutzorgan (13) betätigt werden und die einerseits an die Diebstahlschutzzentrale (4, 21) und andererseits an Speiseschaltungen (45, 53) einer Sperrvorrichtung der Diebstahlschutzvorrichtung (48) und eines Motors (54) angeschlossen sind, der einen Riegel (71, 72) des Diebstahlschutzorgans (13) antreibt.

10. Vorrichtung nach Anspruch 9 , **dadurch gekennzeichnet,** daß die Mittel zur Erfassung des verriegelten/entriegelten Zustands des Diebstahlschutzorgans (13) außerdem zwei Hall-Sonden (H1, H2) umfassen, die an die Zentraleinheit (21) angeschlossen sind, um sie über den Zustand des motorbetriebenen Diebstahlschutzorgans (13) zu informieren.

11. Vorrichtung nach einem der Ansprüche 5 bis 10, **dadurch gekennzeichnet,** daß das Diebstahlschutzmodul eine Zentraleinheit (21) umfaßt, deren Eingangsports (30) an einen Kontakt (O) des ersten Schalters (27) des Anlaßschalters (22), (36, 39, 40) an die aufeinanderfolgenden Kontakte (34 - 37) des zweiten Schalters (28) des Anlaßschalters (22), (57, 58) an die Hall-Sonden (H1, H2) zur Erfassung des verriegelten/entriegelten Zustands des Diebstahlschutzorgans angeschlossen sind, deren Ausgänge (49, 50) an die Eingänge einer an die Klemmen des Motors (54) des Diebstahlschutzorgans (13) angeschlossenen bidirektionalen Speiseschaltung (53) zur Stromversorgung angeschlossen sind, die über einen bidirektionalen Bus (41) an eine Zentraleinheit (42) angeschlossen ist, die als Bordrechner für den Austausch von Informationen über ihre jeweiligen Zustände dient, und eine bidirektionale Leitung (25) zum Lese-/Schreibmodul (24) für die RF-Badge.
